Europäisches Patentamt

European Patent Office

Office européen des brevets

(19)

(11) Veröffentlichungsnummer: **0 256 969**
**A2**

(12) **EUROPÄISCHE PATENTANMELDUNG**

(21) Anmeldenummer: 87730075.6

(22) Anmeldetag: 08.07.87

(51) Int. Cl.⁴: **C 09 K 17/00**
C 05 D 9/00, C 05 F 11/00

(30) Priorität: 09.07.86 DE 3623140

(43) Veröffentlichungstag der Anmeldung:
24.02.88 Patentblatt 88/08

(84) Benannte Vertragsstaaten:
AT BE CH DE ES FR GB GR IT LI NL SE

(71) Anmelder: Behrens, Wolfgang
Annen Nr. 2
D-2833 Gross Ippener (DE)

Krupka, Bernd
Baarsen 77
D-3280 Bad Pyrmont (DE)

Diekmann, Heinrich
An der Tränke 1
D-3160 Lehrte OT Arpke (DE)

(72) Erfinder: Behrens, Wolfgang
Annen Nr. 2
D-2833 Gross Ippener (DE)

Krupka, Bernd
Baarsen 77
D-3280 Bad Pyrmont (DE)

Diekmann, Heinrich
An der Tränke 1
D-3160 Lehrte OT Arpke (DE)

(74) Vertreter: Thömen, Uwe, Dipl.-Ing.
Patentanwalt U. Thömen Zeppelinstrasse 5
D-3000 Hannover (DE)

(54) Bodenverbesserungsmittel.

(57) Es wird ein körniges bzw. granulatartiges Bodenverbesserungsmittel vorgestellt. Die Körner bestehen aus speziell aufgearbeitetem Ton und in die Körner sind als feste Bestandteile Partikel von Rindenhumus, Kalksplit und Hilfsstoffen eingebunden.

Durch die Körner wird eine innigliche Verbindung zwischen Ton und Humus geschaffen, wie sie in der Natur ursprünglich nicht vorkommt. Diese innigliche Verbindung beschleunigt beim Einbringen in den Erdboden die Bildung des Ton-Humus-Komplexes, weil durch die direkte Verbindung von Ton und Humus die mechanische bzw. physikalische Stufe des Ton-Humus-Komplexes ersetzt wird, wodurch eine Bodenregenerierung in vergleichsweise kurzer Zeit möglich ist.

EP 0 256 969 A2

**Beschreibung**

Bodenverbesserungsmittel

Die Erfindung betrifft ein Bodenverbesserungsmittel, wie es insbesondere bei ausgezehrten Kultur- und Ödlandflächen verwendet werden kann, um diese zu regenerieren und wieder einer Nutzung für Pflanzen oder dergleichen zuzuführen. Außerdem befaßt sich die Erfindung mit einem Verfahren zur Herstellung eines Bodenverbesserungsmittels.

Im Bereich der Landwirtschaft, des Gartenbaus, sowie auch auf dem Gebiet des Baumschulwesens und des Landschaftsbaus besteht bekanntlich das allgemeine gravierende Problem einer Bodendegeneration.

Die Bodendegeneration wird vorwiegend durch eine zu intensive Nutzung der Böden hervorgerufen, die praktisch ausgezehrt werden. Weitere Faktoren sind eine zu starke anorganische Düngung, die Anwendung von Schädlingsbekämpfungsmitteln und einseitige Kulturen. Ungünstig wirken sich weiterhin auch ein zu starkes Befahren, eine unzureichende Humusversorgung sowie Schadstoffemissionen in Form von Schwefel oder Schwermetallen aus. Insbesondere die Versauerung der Böden durch sauren Regen, die auch eine Teilursache des Waldsterbens ist, stellt heute ein ernstzunehmendes Problem dar.

Die in der Natur anzutreffenden verschiedenen Bodenarten (Sand-, Lös-, Lehm- oder Tonböden) sind für die auftretenden Belastungen in unterschiedlicher Weise anfällig. Insbesondere bei dem weit verbreiteten Sandboden ist diese Anfälligkeit von Natur aus sehr groß, weil hier stabilisierende Komponenten wie Tonminerale und Humus nur in unzureichender Weise vorrätig sind. Es kommt noch hinzu, daß der Humus im Sandboden sehr schnell abgebaut wird.

Um den beschriebenen Nachteilen zu begegnen, wird in der Praxis verstärkt versucht, durch Düngung mit Kalk, Humusstoffen und mit der Zugabe von Tonmineralien Verbesserungen zu erzielen. Diese Stoffe werden üblicherweise einzeln ausgebracht bzw. gesäht, was beispielsweise bei den staubfeinen und hygroskopischen Tonmineralen außerordentlich schwierig ist.

Das Ziel der Ausbringung der obigen Stoffe ist neben der Verbesserung des Wasserhaushaltes (Wasserkapazität) vor allem die Initiierung des sogenannten "Ton-Humus-Komplexes" (vgl. das Buch "Bodenkunde", 1969, Verlag Eugen Ulmer Stuttgart, Seite 129).

Der natürliche Ton-Humus-Komplex ist eine wesentliche Grundlage aller Bodenfruchtbarkeit, da durch ihn die biologischen, chemischen und physikalischen Eigenschaften des Bodens entscheidend verbessert werden. Dies erfolgt unter anderem durch eine Anlagerung und Freisetzung von Nährstoffen durch Lüftung des Bodens und durch eine Verbesserung des Wasserhaushaltes.

Der somit wichtige Ton-Humus-Komplex entsteht durch biologische Prozesse der Bodenmikro- und BodenmakroFauna, sowie durch bodenphysikalische Prozesse. Es tragen also Bakterien, Regenwürmer und das weitere natürliche Bodenleben zur Entstehung des Ton-HumusKomplexes bei, der dadurch aus vollständig umgesetztem Humus und wertvollen Tonmineralien gebildet wird und ein wissenschaftlich definiertes und beschreibbares Aggregat darstellt.

Die Bildung des natürlichen Ton-Humus-Komplexes nimmt einen großen Zeitraum in Anspruch, da die voranstehend erwähnten biologischen Prozesse und bodenphysikalischen Prozesse relativ lange dauern. Es ist bisher nur über den Umweg der Zugabe von helfenden und fördenden Stoffen (Dünge- und Wirkstoffe) in den Boden und über das Wirken des Bodenlebens über einen längeren Zeitraum gelungen, die Bildung der Ton-Humus-Komplexe zu ermöglichen. Dabei können in der Praxis Zeiträume von etwa 2 - 5 Jahren vergehen. Während dieser Zeit steht der betreffende Boden für eine Nutzung nicht zur Verfügung. So lassen sich beispielsweise Umweltschäden erst nach Ablauf von mehreren Jahren beseitigen.

Durch die Erfindung sollen die beschriebenen Nachteile beseitigt werden, und der Erfindung liegt daher die Aufgabe zugrunde, ein Bodenverbesserungsmittel zu schaffen, welches eine erhebliche Verkürzung der Regenrationsphase eines Bodens und eine Vereinfachung laufender Bodenpflegemaßnahmen sowie eine wirkungsvolle und rasche Bekämpfung von Umweltschäden ermöglicht. Außerdem soll durch die Erfindung ein Verfahren zur Herstellung eines solchen Bodenverbesserungsmittels ermöglicht werden.

Dieses Ziel erreicht die Erfindung durch ein Bodenverbesserungsmittel, welches durch KÖrner aus Ton gebildet ist, die Bestandteile von Humus beinhalten, welche fest umschlossen in die Körner eingebunden sind.

Durch die Erfindung wird in neuartiger Weise ein Bodenverbesserungsmittel in Form von Körnern bzw. als Granulat geschaffen, wobei jedes Korn aus Ton besteht und Humusbestandteile bzw. Humuspartikel enthält, die als feste Bestandteile in die Körner eingebunden sind. Dabei stellen die Ton-Körner jeweils eine innigliche feste Verbindung auf engstem Raume von Ton und Humus dar. Eine solche direkte Verbindung kommt ursprünglich in der Natur nicht vor.

Es wurde weiter oben schon erläutert, daß bei der bisher üblichen Düngung die Bestandteile wie Ton und Humus einzeln und getrennt voneinander ausgebracht wurden. Für die Bildung des wichtigen Ton-Humus-Komplexes ist aber als erste Stufe ein mechanisches Zusammenbringen von Ton und Humusbestandteilen erforderlich. Dies scheitert daran, daß sich die Bestandteile leicht wieder entmischen, weshalb diese erste Stufe auch einen sehr langen Zeitraum beansprucht. Man hat zwar schon versucht, das Zusammenbringen der Stoffe durch physikalische Prozesse, beispielsweise durch Pflügen oder durch Einsickern von Wasser, zu beschleunigen, allerdings ist diesen Maßnahmen nur ein geringer Erfolg beschieden.

Ein entscheidender Vorteil der Erfindung besteht nun darin, daß die genannte erste Stufe sozusagen künstlich gelöst und schon vorgegeben wird. Wenn das neue Bodenverbesserungsmittel als Granulat in einen Sandboden eingebracht wird, liegt die ursprünglich in der Natur nicht vorkommende direkte innigliche Verbindung zwischen Humus und Ton bereits vor, d.h. es können gleich in einer zweiten Stufe die biologischen Prozesse der Bodenmikro- und Bodenmakro-Fauna einsetzen. Durch Bakterien und Regenwürmer wird also in relativ kurzer Zeit die Bildung des Ton-Humus-Komplexes herbeigeführt. Die aktive biologische Regenerationsphase im Boden läßt sich durch die Erfindung auf erheblich kürzerem Wege erzielen, so daß es möglich ist, eine Regeneration von ausgezehrten Böden innerhalb nur einer Vegetationsperiode (beispielsweise 1 Jahr) zu erzielen. Dies bedeutet eine erhebliche Vereinfachung und Beschleunigung laufender Bodenpflegemaßnahmen, und auch Umweltschäden an Böden lassen sich schnell und wirkungsvoll bekämpfen.

Das wesentliche Merkmal der Erfindung besteht also in der Schaffung einer inniglichen physikalischen Verbindung zwischen Ton und Humus in Form von speziell aufgearbeiteten Tonkörnern, wobei die Humuspartikel in die Tonkörner eingebunden und praktisch von einem Tonmantel umgeben sind. Die Korngröße liegt dabei vorzugsweise in der Größenordnung von Millimetern.

Die Schaffung der neuartigen Körner erfolgt trotz des Umstandes, daß Ton in reiner Form bekanntlich ein außerordentlich schwer zu bearbeitender und handhabender Stoff ist. Der Ton ist entweder in trockenem Zustand sehr hart oder im feuchten Zustand von außerordentlich hinderlicher, klebender und schmierender Konsistenz. Aufgrund dieser Eigenschaften hat man bisher eine Verbindung mit bodenfördernden Hilfsstoffen wie Humus oder wie - gemäß einer zweckmäßigen Ausgestaltung der Erfindung - Kalk nicht für möglich gehalten.

Bei der Erfindung können für die Herstellung der Körner Aufbereitungsverfahren wie Kollern, Walzen, Pressen und Trocknen vorgesehen werden, um eine innigliche Verbindung der einzelnen Bestandteile zu erreichen. Der Trockenvorgang läßt sich so durchführen, daß die Humus-Bestandteile dabei nicht verflüchtigen. Beim Pressen wird zweckmäßigerweise ein hohes Vakuum erzeugt, um das Umschließen der Bestandteile im Inneren der Körner durch den Ton selbst bzw. durch den äußeren Tonmantel zu erreichen. Die gefertigten neuen Körner werden in den Boden eingebracht, wobei die Möglichkeit gegeben ist, auf direktem Wege die physikalische Stufe des Ton-Humus-Komplexes direkt in den Boden einzugeben.

In zweckmäßiger Ausgestaltung der Erfindung können die Körner als weitere Bestandteile noch begleitende Hilfsstoffe enthalten, die sofort das Bodenleben aktivieren, so daß in kürzester Zeit die noch erforderliche Restumsetzung für die Bildung des TonHumus-Komplexes durchgeführt werden kann. Durch ein Gemisch verschiedener Korngrößen läßt sich dabei eine Kurz- und Langzeitwirkung erzielen.

Für die erwähnten begleitenden Hilfsstoffe können Kalk und/oder Dünger usw. eingesetzt werden. In jedem Fall gilt, daß auch diese Bestandteile fest in die aus Ton bestehenden Körner eingebunden sind.

Das neue Bodenverbesserungsmittel kann zusammenfassend als ein multifunktionaler Bodenverbesserer bezeichnet werden, da die unterschiedlichen benötigten Funktionen jeweils in einem Korn sowohl bezüglich des Ausbringens als auch bezüglich der Wirkung im Boden selbst zusammengefaßt sind.

Durch die DE-PS 33 30 749 ist zwar schon ein Düngeund Bodenverbesserungsmittel mit einem Gehalt an Baumrinde und einem Hornspäne enthaltenden Naturdünger bekannt, welches unter anderem zusätzlich durch Mahlung von porosiertem und gebranntem Ton hergestellte Tonkörner enthält, allerdings bestehen diese Körner ausschließlich aus Ton und beinhalten keine weiteren Bestandteile. Die beschleunigte Initiierung des Ton-Humus-Komplexes läßt sich daher mit dem bekannten Dünge- und Bodenverbesserungsmittel nicht herbeiführen.

In einer zweckmäßigen Ausgestaltung der Erfindung wird die Ton-Grundsubstanz für die Körner mit anderen Tonmineralien z.B. Bentonit, angereichert. Dadurch ist in vorteilhafter Weise eine Anpassung des Grundmaterials gegeben, und es besteht somit die Möglichkeit, als Ton-Grundsubstanz auch einen an sich weniger geeigneten Ton zu verwenden.

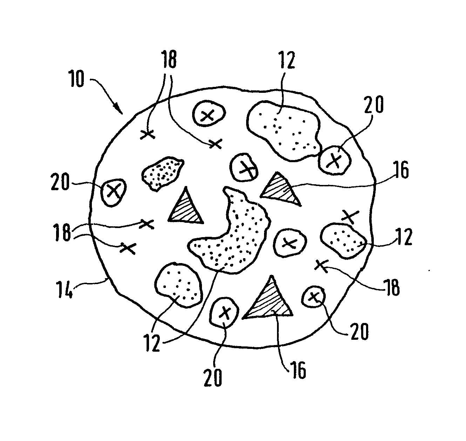

Weitere vorteilhafte Ausgestaltungen der Erfindung sind in den Unteransprüchen angegeben und der Zeichnung zu entnehmen.

Nachfolgend wird die Erfindung anhand des in der Zeichnung dargestellten Ausführungsbeispiels näher erläutert, welches

eine schematische Querschnittsansicht eines Kornes aus Ton mit darin eingebundenen Bestandteilen

zeigt. Das als Ganzes mit der Bezugsziffer 10 bezeichnete Korn liegt in Größenordnungen von etwa bis zu 6 mm vor.

Innerhalb des Kornes 10 befinden sich fest eingebundene Humuspartikel 12, Kalkbestandteile 16, Hilfsstoffe-Bestandteile 18, beispielsweise in Form von Düngerbestandteilen 20.

Die genannten Bestandteile sind zusammen mit dem Ton praktisch zu einem festen Gemenge zusammengefügt und durch den äußeren Tonmantel 14 umschlossen. Dabei können gewisse Partikel durchaus auch teilweise durch den Tonmantel nach Außen hervorragen.

Für die Herstellung der neuen Körner 10 werden Aufbereitungsverfahren wie Kollern, Walzen, Pressen und Trocknen angewendet, um eine innigliche Verbindung der einzelnen Materialien zu erreichen.

Zunächst erfolgt in einem ersten Verfahrensschritt eine Vermischung der einzelnen Bestandteile mit dem Ton und ein Verkleinerungsprozeß durch Kollern. Dabei entstehen Tonwürste von 3 - 4 cm Länge und etwa 1 cm Dicke.

Diese Tonwürste werden anschließend gewalzt und auf etwa 1 mm Stärke gestaucht. Vorzugsweise durch ein Radialwalzen werden die Materialien eng ineinander gestaucht, und es entstehen plattenförmige Tonscheiben von beispielsweise 1 cm Dicke.

Als nächstes erfolgt jetzt eine Zwischenlagerung zur Homogenisierung, wobei das gemischte Material durchfeuchtet. Die Zwischenlagerung erstreckt sich über einen Zeitraum von etwa einer Woche bis zu 10 Tagen.

Danach erfolgt dann eine weitere Mischung in einem Mischer (Doppelwellenmischer), und die Feuchtigkeit wird auf eine Endfeuchte von etwa 25 % gebracht.

Es schließt sich jetzt der wichtige Vorgang einer Vakuumverpressung an. Hierbei wird dem Ton Luft entzogen. Da der Ton plastisch ist, hat diese Vakuumverpressung zur Folge, daß der Ton alle Bestandteile bzw. Partikel fest umschließt. Als Ergebnis der Vakuumverpressung entstehen sogenannte Preßlinge von runder oder auch quaderförmiger Form.

Der nächste Verfahrensschritt besteht in der Trocknung der Preßlinge, wobei diese Trocknung in Kammer- oder Trommeltrocknern erfolgen kann, wie sie in Ziegeleien üblich sind. Der Trocknungsvorgang wird so eingestellt, daß die Humusbestandteile sich nicht verflüchtigen. Gegebenenfalls wird die Trocknung in Intervallen vorgenommen, und am Ende der Trocknung soll das getrocknete Produkt eine Restfeuchte von etwa 8 % aufweisen. Die Trocknung erfolgt also in einer "vorsichtigen" Weise, um zu verhindern, daß gewünschte Bestandteile verbrennen, mit anderen Worten: Es handelt sich am Ende des Trocknungsvorganges nicht um einen gebrannten Ton.

Schließlich wird das getrocknete Material gemahlen und/oder gebrochen, so daß dann die neuen Körner 10 zur Verfügung stehen, in denen die gewünschten Bestandteile fest umschlossen eingebunden sind.

**Patentansprüche**

1. Bodenverbesserungsmittel, gekennzeichnet durch Körner (10) aus Ton, die Bestandteile von Humus (12) beinhalten, welche fest umschlossen in den Körnern (10) eingebunden sind.

2. Bodenverbesserungsmittel nach Anspruch 1, dadurch gekennzeichnet, daß die Körner (10) etwa zu 60 % aus Ton und zu 40 % aus Humus bestehen.

3. Bodenverbesserungsmittel nach Anspruch 1 und/oder 2, dadurch gekennzeichnet, daß Humus (12) unterschiedlicher Art und Herkunft, z.B. Rindenhumus vorgesehen ist.

4. Bodenverbesserungsmittel nach einem der vorhergehenden Ansprüche 1 - 3, dadurch gekennzeichnet, daß die Körner (10) neben den Bestandteilen von Humus zusätzlich Bestandteile von Kalk (16) enthalten, die gemeinsam mit den Humusbestandteilen fest in den Körnern (10) aus Ton eingebunden sind.

5. Bodenverbesserungsmittel nach Anspruch 4, dadurch gekennzeichnet, daß die Körner (10) etwa zu 60 % aus Ton, zu 30 % aus Humus und zu 10 % aus Kalk bestehen.

6. Bodenverbesserungsmittel nach Anspruch 4 und/oder 5, dadurch gekennzeichnet, daß die Kalkbestandteile (16) durch Kalk in Pulverform gebildet sind.

7. Bodenverbesserungsmittel nach Anspruch 4 und /oder 5, dadurch gekennzeichnet, daß die Kalkbestandteile (16) durch Kalk in Form von Körnung gebildet sind.

8. Bodenverbesserungsmittel nach Anspruch 4 und/oder 5, dadurch gekennzeichnet, daß die Kalkbestandteile (16) durch Dolomit gebildet sind.

9. Bodenverbesserungsmittel nach einem der vorhergehenden Ansprüche 1 - 8, dadurch gekennzeichnet, daß der verwendete Ton mit anderen Tonmineralien wie Bentonit oder dergleichen angereichert ist.

10. Bodenverbesserungsmittel nach einem der vorhergehenden Ansprüche 1 - 9, dadurch gekennzeichnet, daß die Körner (10) in geringer Menge Bestandteile von Hilfsstoffen wie Dünger enthalten, die zusammen mit den anderen Bestandteilen fest in die Körner (10) eingebunden sind.

11. Verfahren zur Herstellung eines Bodenverbesserungsmittels nach einem der Ansprüche 1 - 10, dadurch gekennzeichnet, daß verformbarer Ton mit den gewünschten Bestandteilen bzw. Partikeln mechanisch zu einer Mischung vermischt wird, daß die Mischung unter Vakuum einer Vakuumpressung und einer anschließenden Trocknung unterzogen wird, und daß das getrocknete Produkt zu Körner gemahlen oder gebrochen wird.

12. Verfahren nach Anspruch 11, dadurch gekennzeichnet, daß das Vermischen durch Kollern erfolgt, wobei als Mischung Tonwürste entstehen, die anschließend durch Walzen und Stauchen zu plattenförmigen Tonscheiben verarbeitet werden.

13. Verfahren nach Anspruch 12, dadurch gekennzeichnet, daß die Tonscheiben zur Homogenisierung und Durchfeuchtung mehrere Tage, vorzugsweise eine Woche - 10 Tage zwischengelagert werden.

14. Verfahren nach Anspruch 13, dadurch gekennzeichnet, daß im Anschluß an die Zwischenlagerung eine weitere Vermischung erfolgt, und daß das Produkt auf eine Endfeuchtigkeit von etwa 25 % gebracht wird.

15. Verfahren nach einem der vorhergehenden Ansprüche 11 - 14, dadurch gekennzeichnet, daß das gemischte Produkt in der Weise getrocknet und auf eine Restfeuchtigkeit von etwa 8 % gebracht wird, daß die vermischten Bestandteile wie Humus usw. nicht verbrennen, und daß kein Substanzverlust der organischen Bestandteile durch Verglühen oder Vergasen auftritt.

16. Verfahren nach Anspruch 15, dadurch gekennzeichnet, daß die Trocknung in Intervallen erfolgt.

17. Verfahren nach einem der vorhergehenden

Ansprüche 11 - 16, <u>dadurch gekennzeichnet,</u> daß das getrocknete Produkt durch Malen und oder Brechen gekörnt wird.

0256969

'29-07-87 M